(19) Europäisches Patentamt
European Patent Office
Office européen des brevets

(11) EP 2 245 814 B1

(12) EUROPEAN PATENT SPECIFICATION

(45) Date of publication and mention
of the grant of the patent:
**17.08.2011 Bulletin 2011/33**

(51) Int Cl.:
*H04L 27/26* (2006.01)

(21) Application number: **09711657.8**

(86) International application number:
**PCT/GB2009/000507**

(22) Date of filing: **23.02.2009**

(87) International publication number:
**WO 2009/104006 (27.08.2009 Gazette 2009/35)**

(54) **Frame timing and carrier frequency recovery for frequency selective signals**

Rahmen-Takt- und Trägerfrequenzwiederherstellung für frequenzselektive Signale

Synchronisation de trames et récupération de fréquence porteuse pour des signaux sélectifs en fréquence

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.02.2008 GB 0803333**

(43) Date of publication of application:
**03.11.2010 Bulletin 2010/44**

(73) Proprietor: **The University of Surrey**
**Guildford**
**Surrey GU2 7XH (GB)**

(72) Inventors:
• **AWOSEYILA, Adegbenga**
**Guildford GU2 7XH (GB)**
• **EVANS, Barry, G.**
**Guildford GU2 7XH (GB)**
• **KASPARIS, Christos**
**Guildford GU2 7XH (GB)**

(74) Representative: **Wilson, Alan Stuart**
**Barker Brettell LLP**
**100 Hagley Road**
**Edgbaston**
**Birmingham**
**B16 8QQ (GB)**

(56) References cited:
**US-B1- 6 771 976**

• SI AI ET AL: "A Novel Synchronization Scheme for OFDM Over Fading Channels" ACOUSTICS, SPEECH AND SIGNAL PROCESSING, 2006. ICASSP 2006 PROCEEDINGS . 2006 IEEE INTERNATIONAL CONFERENCE ON TOULOUSE, FRANCE 14-19 MAY 2006, PISCATAWAY, NJ, USA,IEEE, PISCATAWAY, NJ, USA, 14 May 2006 (2006-05-14), page IV, XP031386865 ISBN: 978-1-4244-0469-8
• CATT: "Hybrid SCH symbol timing detection for cell search" 3GPP DRAFT; R1-061839, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Cannes, France; 20060620, 20 June 2006 (2006-06-20), XP050111655 [retrieved on 2006-06-20]
• ZTE: "A New Method on P-SCH Design and Detection" 3GPP DRAFT; R1-070196 A NEW METHOD ON P-SCH DESIGN AND DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20070110, 10 January 2007 (2007-01-10), XP050104239 [retrieved on 2007-01-10]

**Description**

FIELD OF THE INVENTION

The present invention relates to digital receivers in a frequency-selective (wideband) channel and in particular to frame/symbol timing and carrier frequency synchronization in the reception of orthogonal frequency-division multiplexing (OFDM) signals.

BACKGROUND AND PRIOR ART

Orthogonal Frequency Division Multiplexing (OFDM) is a digital multicarrier modulation technique, which uses many orthogonal sub-carriers of different frequencies to transmit and receive a high data rate signal. It has become an increasingly popular scheme for fixed and mobile applications and is already being applied in cable (ADSL), broadcasting (DVB-T/H, DAB) and wireless network (Wi-Fi, WiMax) standards.

The primary advantage of OFDM over single-carrier transmissions is its robustness against frequency-selectivity in the channel, thus eliminating the need for complex time-domain equalization. Indeed, OFDM may be viewed as a composite of many low data rate signals, each modulating a different subcarrier, rather than one high data rate signal. This effectively changes the channel from a wideband transmission into many parallel narrowband transmissions. The low OFDM symbol rate makes the use of a guard interval or cyclic prefix between symbols affordable, masking it possible to handle time-spreading and eliminate inter-symbol interference (ISI). OFDM is efficiently implemented digitally (at the baseband level) through the use of fast Fourier transform (FFT) techniques.

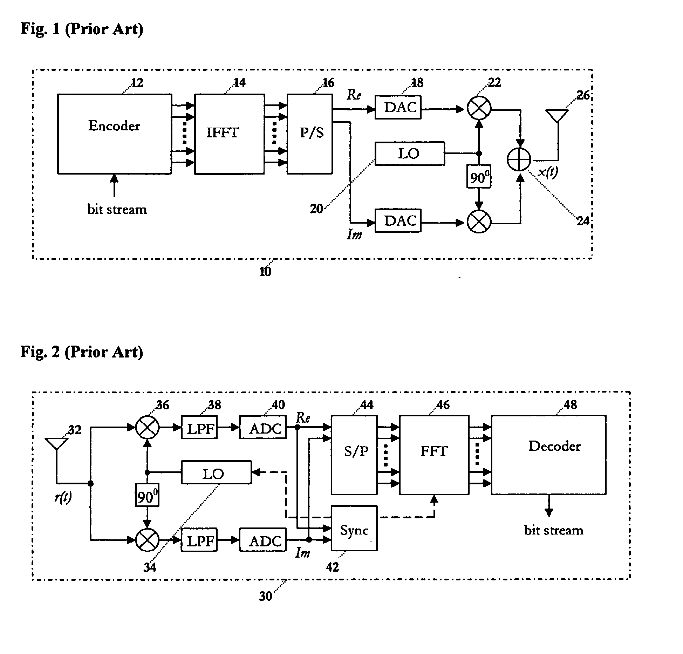

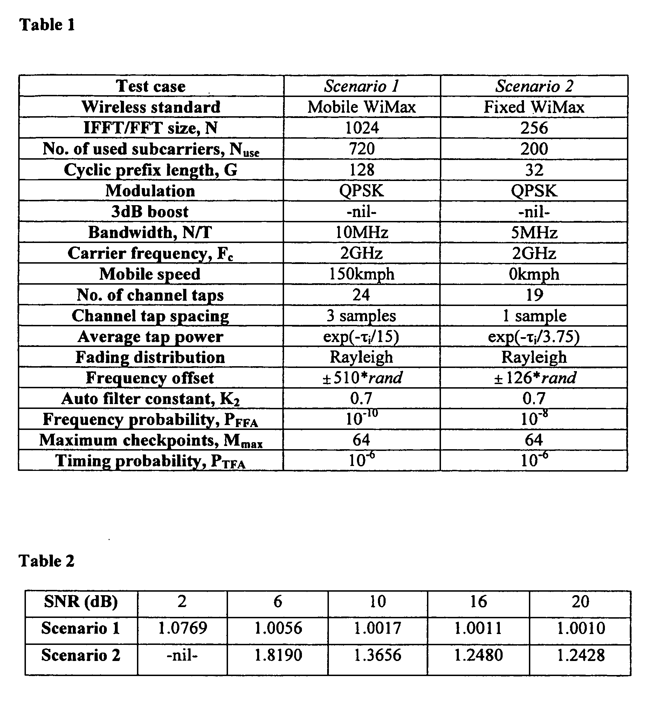

Figure 1 shows the block diagram of a typical OFDM transmitter **10** which comprises an encoder **12** into which a serial bit stream is input, and which performs channel coding and interleaving functions before mapping the resulting bit stream to a digital modulation symbol constellation (such as QAM or PSK). The encoder **12** then demultiplexes this serial stream into N parallel streams (sub-carriers). These are input to an inverse fast Fourier Transform (IFFT) module **14** where they undergo inverse FFT processing from the frequency-domain (FD) to the time domain (TD) resulting in a set of *N* complex time-domain samples. These samples are then multiplexed back by a parallel/serial (P/S) converter **16** into a serial stream where the real (Re) and imaginary (Im) parts of the samples are converted to analogue signals using digital-to-analogue converters (DAC) **18.** These analogue signals are then mixed **22** with the carrier frequency generated by the local oscillator (LO) **20.** The sum **24** of these signals (in-phase and quadrature) results in the OFDM signal which can then be amplified and transmitted via an antenna **26.**

Figure 2 illustrates an OFDM receiver **30** wherein the received signal from the antenna **32** is mixed **36** down to baseband via the local oscillator (LO) **34.** This signal is then low-pass filtered **38** and an analogue-to-digital converter (ADC) **40** provides real (Re) and imaginary (Im) samples of the signal. A synchronisation module **42** then performs timing and carrier frequency recovery before the corrected samples are serial-to-parallel converted **44** to enable them undergo FFT processing (TD to FD) by an FFT module **46** to obtain N parallel streams (sub-carriers), which are passed on to the decoder **48.** The decoder **48** then multiplexes the signal back into a serial stream, perform symbol constellation de-mapping, de-interleaving and channel decoding to obtain a resulting bit stream which is then an estimate of the original bit stream input at the transmitter.

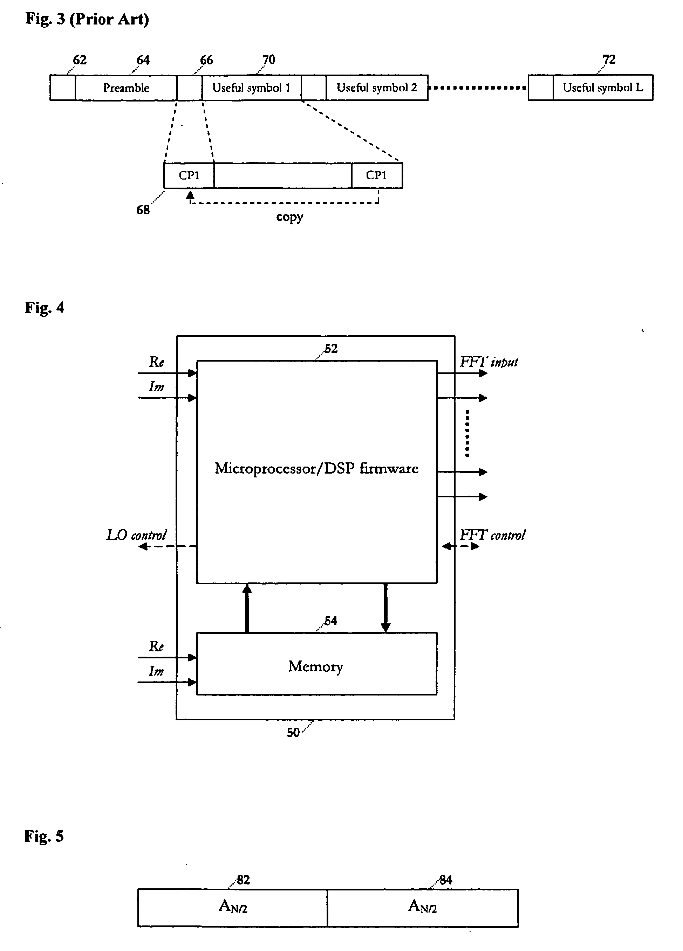

Figure 3 shows schematically a string of time-domain (TD) symbols in a transmitted OFDM frame. Each useful symbol **70,72** consists of *N* samples and is preceded by either a guard interval **66** or a cyclic prefix **68** whose length is usually of a fraction of the useful symbol length (e.g. *N*/4, *N*/8, *N*/16 or *N*/32). One or more preambles **64** may be inserted at the beginning of the OFDM frame for the purpose of synchronization, where such preamble(s) may also have a guard interval **62** or cyclic prefix appended.

The OFDM samples at the output of the IFFT in the transmitter are given by:

$$x_k = \frac{1}{\sqrt{N}} \sum_{n=0}^{N_{use}-1} X_n e^{j2\pi kn/N} \qquad k = 0,1,2,3,.....,N-1 \qquad (1)$$

where N is the total number of subcarriers of which $N_{use}$ are used, to avoid aliasing effects at the edge of the transmission spectrum. $X_n$ represents the data symbol (QAM/QPSK constellation) transmitted on the nth subcarrier while $x_k$ represents the symbol samples after IFFT processing, with each symbol consisting of N samples. However, the transmitted OFDM symbol can be denoted as [$x_{N-G}$, $x_{N-G+1,.....,}$ $x_{N-1.}$ $x_{0,}$ $x_{1........}$ $x_{N-1}$] where the samples which precede $x_0$ represent the cyclic prefix of length *G* (a repetition of the end part of the symbol) which is appended in order to cope with the effect of inter-symbol interference (ISI) resulting from the delay spread of the multipath channel. In some other implementations of OFDM, a guard interval of length *G* consisting of zero samples is used instead of the cyclic prefix.

At the receiver, the waveform from the matched filter is sampled with period $T_s = T/N$ where *1/T* is the subcarrier spacing. Assuming perfect sample timing, the complex samples of the received signal can be represented as:

$$r(k) = y(k - \varepsilon)e^{2\pi\Delta f k / N} + w(k) \qquad (2)$$

where ε is the frame/symbol timing offset measured in samples, $\Delta f$ is carrier frequency offset normalized to the subcarrier spacing, *w(k)* represents the zero-mean complex additive white Gaussian noise (AWGN) and

$$y(k) = \sum_{m=0}^{L-1} h(m)x(k - m) \qquad (3)$$

where *h(m)* is the impulse response of the frequency-selective channel whose memory is denoted by *L*.

Timing synchronization seeks to establish where the OFDM symbol starts to ensure accurate positioning of the FFT window. OFDM exhibits some tolerance to symbol timing errors when the cyclic prefix is used and its length is longer than the maximum channel delay spread. However, an off-the-limit timing error will result in inter-symbol interference (ISI) between adjacent OFDM symbols and consequently degrade the overall decoder performance. On the other hand, OFDM is very sensitive to carrier frequency offsets which are caused by Doppler shifts and/or instabilities in the local oscillator (LO). If left uncorrected, it will result in inter-carrier interference (ICI) as the frequency shift in the subcarriers will cause them to lose their orthogonality. This will invariably lead to a poor decoder performance. As a result, it is usually required to reduce the frequency errors to a small fraction of the subcarrier spacing. Commercially available crystal oscillators have a limit on the frequency accuracy they can provide. Therefore, in many instances, the frequency offset can be many multiples of the subcarrier spacing. Consequently, frequency and timing synchronization are a very important part of the OFDM receiver design.

Various techniques have been proposed for OFDM timing and/or frequency synchronization. A conventional method is that of Schmidl and Cox (S&C) as disclosed in U.S Patent No. 5,732,113. The S&C method makes use of a two-symbol preamble, with the first symbol having two identical parts in time-domain. This symbol is used to estimate the symbol timing and fractional frequency offset (TD) while the integer frequency estimation is done using the two symbols after FFT processing (FD). Although, the S&C method is robust, it has some downsides which include a poor timing mean square error (MSE) performance as the peak of its timing metric is a plateau arising from the samples repetition occasioned by the cyclic prefix. Another conventional method is that of Morelli and Mengali (Morelli, M., and Mengali, U., "An improved frequency offset estimator for OFDM systems," IEEE Comm. Lett., vol. 3, no. 3, pp. 239-241, Mar 1999) where a preamble made up of one training symbol witch many identical parts is used to have an improved frequency estimation range and accuracy while the timing algorithm is the same as that of S&C. A downside of the Morelli method is that the practical number of identical parts usable is limited, thereby limiting the estimation range to some few multiples of the subcarrier spacing. It also suffers from a poor timing performance in similar fashion to the S&C method. Other methods are proposed by Minn (Minn, H., Zeng, M., and Bhargava, V.K., "On timing offset estimation for OFDM systems," IEEE Comm. Lett., Vol. 4, pp. 242-244, Jul. 2000), Park (Park, B., Cheon, H., Kang, C., and Hong, D., "A novel timing estimation method for OFDM systems," IEEE Comm. Lett., vol. 7, no. 5, pp. 239-241, May 2003) and Ren (Ren, G., Chang, Y., Zhang, H., and Zhang, H., "Synchronization methods based on a new constant envelope preamble for OFDM systems," IEEE Trans. on Broadcasting, vol. 51, no. 1, March 2005) to achieve an improvement in timing performance but their timing mean square errors are still far from ideal in frequency-selective Rayleigh fading channels. In addition, the preamble used in Ren's method leads to degradation in the frequency estimation accuracy.

US 6 771 976 discloses a method of synchronizing a received signal to a reference signal using autocorrelations and cross correlations.

SUMMARY OF THE INVENTION

The present invention provides a method of synchronizing a receiver to a received signal, wherein the signal includes a training symbol having two identical parts, the method including determining a degree of autocorrelation between parts of the signal at the spacing of the two identical parts, and a degree of cross-correlation between parts of the received signal and a reference copy of the training symbol, and multiplying together the autocorrelation and cross-correlation to determine at least one of the timing and the frequency of the received signal. This may be achieved by multiplying the cross-correlation and autocorrelation directly, or by multiplying a function, which may be referred to as a timing metric, of one of them with the other, or my multiplying functions of both of them together.

The symbol may include more than two identical parts, or only two identical parts.

The signal may be transmitted in a frequency selective channel i.e. the signal may be a wideband signal. For example the signal may be an orthogonal frequency division multiplexing signal.

The received signal may be separated into a series of symbols separated from each other by a prefix, the training symbol comprising one of the series of symbols.

Preferred embodiments of the present invention provide a method and apparatus for rapid frame/symbol timing and carrier frequency synchronization of a digital receiver to an orthogonal frequency division multiplexing (OFDM) signal and other transmissions (either continuous or burst) over a frequency-selective (wideband) channel. In some embodiments, a preamble structure, consisting of just one training symbol with two identical halves is used. In other embodiments more than two identical parts may be used. The method may include determining a degree of autocorrelation between parts of the signal, for example at the spacing of the two or more identical parts. If more than two identical parts are present, they may be evenly spaced, or unevenly spaced, but provided the spacing is known, the autocorrelation can be calculated. It may also include determining a degree of cross correlation between parts of the received signal and a reference symbol. Its timing estimation performance approaches the ideal with a very low mean square error while its frequency accuracy is competitive. It also has a wide frequency estimation range of half the signal bandwidth, yet it has a low, scalable and adaptive complexity that can be optimized to a specific application.

In the preferred embodiment, the method consists of an autocorrelation and restricted differential cross-correlation stage, a restricted two-dimensional (2D) joint time-frequency cross-correlation stage and a restricted cross-correlation stage. The preamble can be generated in the frequency domain by modulating even sub-carriers with an appropriate PN sequence while zeros are used on the odd frequencies. The preamble may alternatively be generated in the time-domain via direct repetition of an appropriate PN sequence, particularly for non-OFDM applications.

By using the identical parts of the signal, the autocorrelation stage is able to detect the presence of the preamble in the receiver, estimate a coarse timing which is used to calculate the fractional frequency offset and also to derive the timing filter window. This filter window then determines which timing points will undergo differential cross-correlation to determine the most probable timing points for best timing. The estimated fractional frequency offset is corrected over the received samples and these are fed into the 2D joint time-frequency cross-correlation stage where only the most probable timing points are tested in descending order of strength to verify the best timing point and jointly determine the integer frequency offset. This integer frequency offset is then corrected over the received samples and a restricted set of timing points preceding the so determined best timing point are tested in order to estimate the ideal start of the FFT window (i.e. the optimal timing point).

An aim of some preferred embodiments of the present invention is to achieve (with minimum waste of bandwidth) the same decoder error-rate performance as would obtain if there were no synchronization issues in the receiver. Therefore some preferred embodiments of the present invention have a number of advantages over previously known methods:

1. The timing estimation accuracy supersedes those achievable by conventional methods. This means that the degradation in the decoder error-rate due to residual timing errors can now be overcome, resulting in a transmission/reception power gain.

2. The method achieves competitive frequency accuracy and unlike some conventional methods, it does not compromise frequency accuracy for improvement in timing accuracy.

3. The method achieves a full frequency estimation range using only one training symbol as preamble. It is therefore bandwidth efficient while at the same time, it can accommodate low-cost oscillators in the receiver.

4. The method has a low, scalable and adaptive complexity that can be optimized to a specific application. Consequently, it has a better acquisition or estimation time when compared to conventional methods achieving similar estimation accuracy and range.

5. Timing and frequency estimation are completed in time-domain and there is no post-FFT data recovery and processing involved.

6. The method outperforms conventional methods in terms of error-free integer frequency estimation when either the FFT size or the $N_{use}/N$ ratio is small.

7. The method is not restricted to OFDM signals or transmissions and can be applied to other types of transmissions in a frequency-selective (wideband) channel.

BRIEF DECSRIPTION OF THE DRAWINGS

**Figure 1** is a block diagram of a typical OFDM transmitter according to the prior art;

**Figure 2** is a block diagram of a typical OFDM receiver according to the prior art;

**Figure 3** is an illustration of a transmitted OFDM frame (in time-domain) consisting of a sequence of symbols generated by the transmitter of Figure 1 according to the prior art;

**Figure 4** is a block diagram of a synchronization module according to an embodiment of the present invention for performing frame/symbol timing and carrier frequency recovery in the receiver of Figure 2;

**Figure 5** is an illustration of the two identical parts of the one-symbol preamble inserted in the transmitted OFDM frame of Figure 3 and used to achieve timing and frequency recovery in the synchronization module of Figure 4;

**Figure 6** shows how the normalized auto timing metric derived via the synchronization module of Figure 4 varies with timing offset in a test wideband channel;

**Figure 7** shows how the peak of the timing metric in Figure 6 varies with signal-to-noise-ratio (SNR) in a test wideband channel;

**Figure 8** shows how the differential cross-correlation metric derived via the synchronization module of Figure **4** varies with timing offset in a test wideband channel;

**Figure 9** shows how the autocorrelation filter window derived via the synchronization module of Figure 4 varies with timing offset in a test wideband channel;

**Figure 10** shows how the 1D Integer frequency offset metric derived via the synchronization module 50 varies with timing offset in a test wideband channel;

**Figure 11 and 12** show how the normalized timing mean square error (MSE) varies with signal-to-noise ratio for different simulation scenarios of the invention in comparison with a prior art of synchronization;

**Figure 13 and 14** show how the normalized timing bias varies with signal-to-noise ratio for different simulation scenarios of the invention in comparison with a prior art of synchronization; and

**Figure 15 and 16** show how the normalized frequency mean square error

(MSE) varies with signal-to-noise ratio for different simulation scenarios of the invention in comparison with a prior art of synchronization.

**Table 1** defines the parameters for two test scenarios for the preferred embodiment of this invention. This includes the OFDM parameters and the wideband channel parameters.

**Table 2** shows the mean number of timing checkpoints used for successful estimations in the scenarios defined in Table 1 in order to illustrate the low complexity of the present invention.

DETAILED DESCRIPTION OF THE PREFERRED EMBODIMENT

A preferred embodiment of the present invention will now be described in detail and with reference to the accompanying drawings. This is without loss of generality to the scope of the present invention. The preferred embodiment is described with reference to the WiMax wireless standard for fixed and mobile systems but the invention itself is applicable to a wide range of applications including OFDM digital TV.

In this embodiment, the transmitter and receiver are as described above with reference to Figures 1 and 2, except where described as different below.

A module which implements the methods of the present invention in a preferred embodiment is shown in the block diagram of Figure 4. This synchronization module **50** replaces the module **42** and **44** in the prior art OFDM receiver **30** of Figure 2 according to the preferred embodiment of this invention. The synchronization apparatus **50** includes a digital signal processing/computing means **52** and a memory/storage means **54** both of which are connected such that they can exchange data at a sufficiently fast rate.

In the preferred embodiment of this invention, the autocorrelation properties of the training symbol (i.e. the identical parts) and its cross-correlation properties (i.e. a reference copy of the training symbol stored in **54)** are used to perform frame/symbol timing and carrier frequency recovery. The synchronization process is a multi-stage procedure that guarantees robust performance. The basic stages in the process can be described as follows:

Stage 1: autocorrelation and restricted differential cross-correlation

Stage 2: restricted 2D joint time-frequency cross-correlation

Stage 3: restricted cross-correlation

All stages are performed in the time-domain (TD) and post-FFT data recovery is not needed to achieve full-range synchronization. Before the first stage of processing, the received OFDM signal is mixed down to baseband, filtered and converted to obtain real (*Re*) and imaginary (*Im*) samples of the OFDM signal as described in the prior art and with reference to Figure 2.

### 1. The preamble/training sequence

A preamble **64** consisting of only one training symbol is used with the method of this embodiment. It has a known structure which is widely used in some wireless standards (e.g. Wi-Fi, WiMax). This structure in the time-domain is as shown:

$$S = [A_{N/2}, A_{N/2}] \qquad\qquad (4)$$

where S is a training symbol consisting of two identical parts **82** and **84.** The lag between the corresponding samples of each identical part is *N/2* samples long with N being the FFT/IFFT size in samples.

The training symbol can be generated in the frequency-domain (FD), i.e. input to the IFFT module **14,** by transmitting a pseudo-noise (PN) sequence (e.g. from a QPSK constellation) on the even sub-carriers, while zeros are used on the odd sub-carriers. The PN sequence is appropriately scaled (by multiplying by $\sqrt{2}$) in order to maintain a unit signal energy for the OFDM symbol. By using IFFT processing **14,** the structure of S is produced in the time domain. The training symbol can also be generated directly in the time domain (TD), i.e. after the IFFT module **14,** by using a suitable PN sequence and following the defined structure of S via direct repetition. This type of training symbol can have more relevance in non-OFDM wideband applications.

As is practised in OFDM systems, a cyclic prefix (CP) or guard interval **62** is appended to the beginning of the preamble to eliminate the Inter-symbol Interference (ISI) resulting from the delay spread of the channel. The use of a cyclic prefix has advantages over the guard interval in that it helps to provide some tolerance to timing errors and also achieves a better fractional frequency estimation accuracy.

### 2. Stage 1: autocorrelation and restricted differential cross-correlation

At stage 1, firstly, the synchronization module **50** obtains the real (*Re*) and Imaginary (*Im*) parts of the received signal from storage **54** denoted as '*r*' and the processor **52** computes an autocorrelation of the received samples, using a correlation lag of *N/2.* This autocorrelation can either be computed directly for each set of samples at a particular timing index *d* or it may be derived iteratively.

$$P_a(d) = \sum_{k=0}^{N/2-1} r^*(d+k)\, r(d+k+N/2) \qquad\qquad (5)$$

$$D_a(d) = \frac{1}{G+1} \sum_{d-G}^{d} |P_a(d)|^2 \qquad\qquad (6)$$

where *r** is the complex conjugate of the received 'complex-valued' signal samples *r*, *d* is the time index, *k* is the sample index, $P_a(d)$ is the autocorrelation and $D_a(d)$ is the auto timing metric.

In (6), a technique is introduced to eliminate the known plateau associated with the autocorrelation of the preamble due to the presence of a cyclic prefix of length *G*. This is achieved by averaging the autocorrelation over the cyclic prefix length. This helps to improve the accuracy of the metric. Such averaging is not applicable where a cyclic prefix is not used.

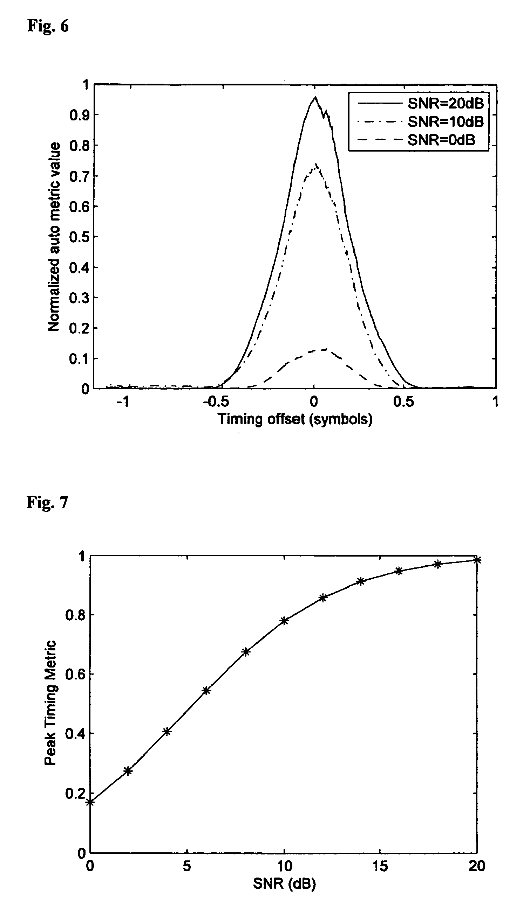

The presence of the preamble is detected by the processor **52** by locating a peak in the auto timing metric; the value of such peak having exceeded a pre-determined threshold, $T_{th1}$ which depends on both the SNR and the received energy. This threshold is derived based on the statistics of the auto timing metric normalized by the received energy term as illustrated in Figure 6 and 7 which show a plot of $D_a(d)/(R_a(d))^2$.

$$R_a(d) = \sum_{k=0}^{N/2-1} |r(d+k+N/2)|^2 \tag{7}$$

$$T_{th1} = K_1 \left( R_a \left( d_{peak} \right) \right)^2 \tag{8}$$

where $K_1$ is a pre-determined SNR-dependent fractional constant and $R_a(d_{peak})$ is the received energy computed by the processor **52** based on the samples stored in the memory **54** at the peak position of the auto timing metric.

Two reference timing points: the start trigger and the stop trigger ($t_{start}$ and $t_{stop}$) are then determined by the processor **52** as the first timing point preceding the peak and the last timing point succeeding the peak respectively, both having a value greater than or equal to a pre-determined fraction ($K_2$) of the peak value. $K_2$ is as low as 0.65 for a small FFT size/low SNR and can be as high as 0.9 for a large FFT size/high SNR. The reference timing points define a rectangular auto timing filter window $W_a(d)$, having a value of 1 from $d=t_{start}$ to $d=t_{stop}$ and zero elsewhere. This timing window is used to delimit the range of timing points that will be used for further processing in **52,** in order to reduce complexity.

$$t_{start} = \arg \underset{d}{first} \left( D_a(d) > K_2 \max(D_a) \right) \tag{9}$$

$$t_{stop} = \arg \underset{d}{last} \left( D_a(d) > K_2 \max(D_a) \right) \tag{10}$$

In addition to performing autocorrelation, the processor **52** computes a differential cross-correlation between the received signal samples and a reference copy of the training symbol stored in the memory **54** using a restricted set of timing points as defined by the timing filter window. The algorithm is implemented as follows:

$$C(d,k) = r(d+k) S^*(k) \qquad k = 0,1,2...,N\text{-}1 \tag{11}$$

$$P_b(d) = \sum_{k=0}^{N-2} C^*(d,k)C(d,k+1) \tag{12}$$

$$D_b(d) = |P_b(d)|^2 \tag{13}$$

where $C(d, k)$ represents the received signal samples at a timing point d multiplied by the corresponding complex conjugate of the training symbol $S$, $P_b(d)$ is the differential cross-correlation computed for a restricted set of timing points for which the timing filter $W_a(d) = 1$ and $D_b(d)$ is the cross timing metric.

Differential cross-correlation is used here to cope with frequency offsets greater that one sub-carrier spacing as coherent cross-correlation will fail under this condition. Coherent cross-correlation can be used for applications where the frequency offset is guaranteed to be less than one sub-cacrier spacing (e.g. Wi-Fi). For such scenario, stage 2 is not needed.

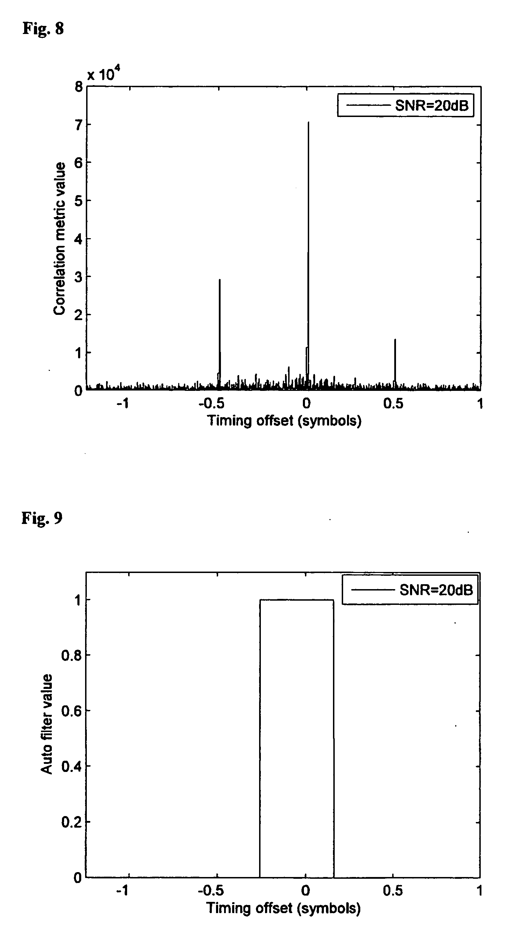

In addition to reducing complexity, the timing filter window helps to eliminate the risk of false detection due to extra cross-correlation peaks arising from the identical parts of the training symbol as illustrated in Figures 8 and 9.

It should be noted that the cross timing metric $D_b(d)$ can alternatively be derived by a multiplication between the autocorrelation in (5) and the differential cross-correlation in (12) or by a multiplication between the auto timing metric in (6) and the cross-timing metric in (13). In such a scenario, all timing points can be used (i.e. no rectangular auto timing filter needed) since the autocorrelation will act as a filter over the cross-correlation. However, this implies an increase in complexity (due to the use of all timing points) and as such, it is not the preferred approach.

### 3. Stage 2: restricted 2D joint time-frequency cross-correlation

At stage 2, an enhanced algorithm which can operate in the two dimensions (2D) of timing and frequency offset is used to jointly determine the best timing point and the integer frequency offset. This 2D estimator combines the strength of known maximum likelihood (ML) frame timing and frequency offset estimators to achieve robust estimation. The basic idea is to use coherent cross-correlation over the most probable timing points (referred to as timing checkpoints). This is done by correcting the received signal at each timing point, over all probable values of integer frequency offsets, before performing cross-correlation with the known preamble. The peak value of the resulting 2D timing-frequency metric indicates both the best timing point and the integer frequency offset.

In order to boost the performance of the estimator, the fractional frequency offset is first computed by the processor **52** by using an autocorrelation frequency estimator over the identical parts of the received preamble as indicated by the peak of auto timing metric. In (14), the peak timing point is corrected by a factor (0.5G) in order to force the frequency estimation into a zone where identical parts are guaranteed. Such correction is not applicable where a cyclic prefix is not used. The frequency offset is then compensated for in the received signal samples stored in the memory **54** before they are used in the 2D time-frequency estimator. Due to the estimation range of the fractional frequency estimator ($\pm 1$), the residual frequency offset becomes an integer multiple of 2, which means that the integer search window is reduced by half.

$$\Delta \hat{f}_f = \frac{1}{\pi} \arg \left\{ \sum_{k=0}^{N/2-1} r^* \left( d_{peak} - 0.5G + k \right) r \left( d_{peak} - 0.5G + k + N/2 \right) \right\} \qquad (14)$$

$$r_{cor}(k) = r(k) e^{-j2\pi k \Delta \hat{f}_f / N} \qquad (15)$$

where $d_{peak}$ is the timing point corresponding to the autocorrelation peak, $G$ is the length of the cyclic prefix, $\Delta \hat{f}_f$ is the fractional frequency offset estimate and $r_{cor}$ is the fractional-frequency-corrected sample.

The timing checkpoints are determined by sorting the cross timing metric shown in (13) in descending order of strength. For each timing checkpoint starting from the strongest, the computing module **52** retrieves a one-dimensional vector of $N$ fractional-frequency-corrected samples from the memory **54** as shown in (16) and performs coherent cross-correlation between such samples and a reference copy of the training symbol S, over all possibilities of integer frequency offset correction as shown in (17) and (18).

$$Z(d) = \begin{bmatrix} r_{cor}(d) & r_{cor}(d+1) & . & . & . & r_{cor}(d+N-1) \end{bmatrix} \qquad (16)$$

$$Q = \begin{bmatrix} S^*(0) & S^*(0) & . & \cdot & S^*(0) \\ S^*(1)e^{-j\frac{2\pi}{N}i_1} & S^*(1)e^{-j\frac{2\pi}{N}i_2} & . & S^*(1)e^{-j\frac{2\pi}{N}i_{range}} \\ S^*(2)e^{-j\frac{2\pi}{N}2i_1} & S^*(2)e^{-j\frac{2\pi}{N}2i_2} & . & S^*(2)e^{-j\frac{2\pi}{N}2i_{range}} \\ . & . & . & . \\ . & . & . & . \\ S^*(N-1)e^{-j\frac{2\pi}{N}(N-1)i_1} & S^*(N-1)e^{-j\frac{2\pi}{N}(N-1)i_2} & . & S^*(N-1)e^{-j\frac{2\pi}{N}(N-1)i_{range}} \end{bmatrix}$$

$$(17)$$

$$I(d) = Z(d) * Q \qquad (18)$$

where $Z(d)$ is a row-vector of length $N$, representing the fractional-frequency-corrected signal samples for a symbol at timing checkpoint $d$, $Q$ is a known $N \times i_{range}$ matrix used for integer frequency correction, $S^*$ is the complex conjugate of the training symbol of length $N$, $i_{range}$ is the possible range of even integer frequency offsets, $I(d)$ is the integer frequency offset metric at timing checkpoint $d$: a row vector of length $i_{range}$ resulting from the *matrix multiply* operation between $Z(d)$ and $Q$.

It should be noted that (17) and (18) can be implemented more efficiently by the use of the FFT algorithm as shown in (19) and (20). This reduces the computational complexity from an order of $N \times i_{range}$ to an order of $N \times log_2N$. The FFT algorithm can either be implemented in software in **52** or the existing module **46** can be used and feedback received by **52** via the FFT control.

$$Z_F(d) = \begin{bmatrix} r_{cor}(d)S^*(0) & r_{cor}(d+1)S^*(1) & . & . & . & r_{cor}(d+N-1)S^*(N-1) \end{bmatrix} \qquad (19)$$

$$I(d) = FFT\{Z_F(d)\} \qquad (20)$$

where $Z_F(d)$ is a row-vector of length $N$, representing the fractional-frequency-corrected samples at timing checkpoint $d$ multiplied by the complex conjugate of the training symbol $S$ and $I(d)$ is the integer frequency offset metric.

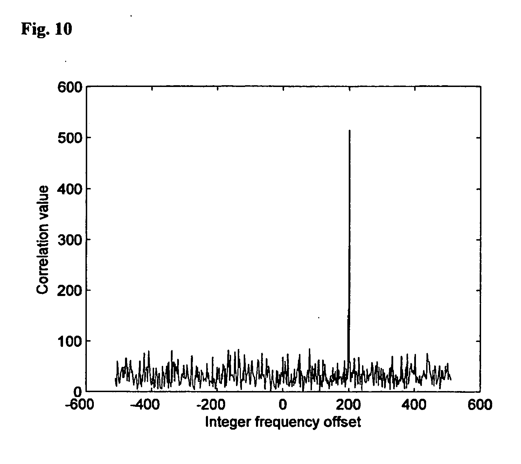

The 2D algorithm is quite flexible/adaptive in terms of complexity as it uses both threshold and MAX detection criteria. The threshold criterion is implemented over the frequency offset axis while the MAX is implemented over both axes. For each timing checkpoint starting from the strongest, the computing means **52** derives a 1D integer frequency offset metric $I(d)$ according to (19) and (20) as shown in Figure 10. The peak value of this 1D metric is compared with a threshold derived from the mean value of the metric. If the threshold $F_{th}$ is exceeded, a successful estimation is declared at that timing checkpoint and the corresponding integer frequency offset. Otherwise, the peak value of the 1D metric, the timing checkpoint and the integer frequency offset that produced such peak are stored in the memory **54** while the next timing checkpoint is used until there is either success or all timing checkpoints have been tested. In such an event, the timing checkpoint and integer frequency offset that jointly produce the maximum value of the 2D time-frequency metric are determined by **52** as the successful estimate.

$$\Delta \hat{f}_i = \arg \max_i \{|I|\} \tag{21}$$

$$\hat{d}_{opt} = \arg \max_d \{|I|\} \tag{22}$$

where $\Delta \hat{f}_i$ is the integer frequency offset estimate and $\hat{d}_{opt}$ is the best timing point estimate. $I$ is either the 1D integer frequency metric at each timing checkpoint where the threshold criterion is successfully used or the complete 2D time-frequency metric where all timing checkpoints have been tested and the MAX criterion is being used.

The threshold criterion is determined based on the statistics of the 1D integer frequency offset metric, giving:

$$F_{th} = \sqrt{-(4/\pi)\ln(P_{FFA})} \; mean(|I(d)|) \tag{23}$$

where $P_{FFA}$ is the designed probability of frequency false alarm whose value is desired to be very low since a false alarm implies a synchronization failure while a missed detection can still be recovered via the MAX criterion of the 2D metric. The recommended value for $P_{FFA}$ is dependent on the FFT size, varying from ~$10^{-8}$ for a small size (e.g. *N=128)* to ~$10^{-10}$ for a large one (e.g. *N=1024*).

The maximum number of timing checkpoints ($M_{max}$) needed for a consistently accurate estimation is inversely proportional to the FFT size (*N*) and the SNR. Nonetheless, for a small FFT size, the increase in $M_{max}$ is balanced out by a reduction in processing complexity since *N* and $i_{range}$ will be small. Ultimately, the pre-determined value to be used depends on the tolerable complexity/latency for synchronization. Based on successful simulations, the following value is recommended, without loss of generality.

$$1 \le M_{max} \le 64 \tag{24}$$

In most occurrences where differential cross-correlation is used, only the first timing checkpoint (*M=1*) is required to achieve estimation success. In some applications (especially for a small FFT size), it may more efficient to exclude cross-correlation from stage 1 in exchange for using more timing checkpoints (i.e. more FFT computations) to achieve success in stage 2 since the FFT algorithm is computationally efficient. In such scenario, the auto timing metric in (6) restricted by the timing filter window and sorted in descending order of strength is used for stage 2.

After successfully estimating the integer frequency offset, compensation is made for this offset in the received signal samples stored in the memory **54.** For continuous applications, a control signal is also sent to the local oscillator **34** to adjust its frequency in accordance with the total frequency offset estimate. At this stage, the carrier frequency synchronization is complete.

$$\Delta \hat{f}_T = \Delta \hat{f}_i + \Delta \hat{f}_f \tag{25}$$

$$r_{corT}(k) = r_{cor}(k) e^{-j2\pi k \Delta \hat{f}_i / N} \tag{26}$$

where $\Delta \hat{f}_T$ is the total frequency offset and $r_{corT}$ is the total-frequency-corrected sample.

### 4. Stage 3: restricted cross-correlation

At stage 3, in order to correct the timing estimate to the ideal start of frame which in most cases is the timing point corresponding to the first occurring channel tap with significant strength (rather than the strongest occurring channel tap that defines the best timing point), computing means **52** uses a timing correction technique on the total-frequency-corrected signal samples stored in the memory **54**. Firstly a restricted cross-correlation is computed by the processor **52.**

$$P_c(d) = \sum_{k=0}^{N-1} r_{corT}(d+k) \, S^*(k) \tag{27}$$

$$d \in \left\{ \hat{d}_{opt} - \lambda, \, \hat{d}_{opt} \right\} \tag{28}$$

where $r_{corT}$ is the total-frequency-corrected signal samples, $S^*$ is the complex conjugate of the training symbol, $G < \lambda < N/2$ and $d$ is an integer that belongs to the specified range.

The timing index d is an element of a restricted set which ranges from a point preceding the best timing point $(\hat{d}_{opt})$ by $\lambda$ samples, to the best timing point. **A** value of $\lambda = 3N/8$ is recommended based on simulations. This helps to eliminate unwanted correlation peaks and minimize complexity/latency on the one hand while tracking sufficient points for estimation accuracy on the other. **A** timing threshold $T_{th2}$ is derived as follows:

$$T_{th2} = \sqrt{-(4/\pi)\ln(P_{TFA})} \, \left( mean\left( |P_d| \right) \right) \tag{29}$$

where $P_{TFA}$ is the designed probability of timing false alarm whose value is chosen in a conservative manner in order to efficiently track the ideal start of the FFT window, bearing in mind that some false alarm can be tolerated due to the ISI-free region preceding the ideal start of frame. The recommended value for $P_{TFA}$ is ~$10^{-6}$ based on successful simulations. $P_d$ is a one-dimensional vector representing the values of $P_c(d)$ at all timing points preceding the best timing point by the length of the cyclic prefix ($G$) or more (i.e. $P_d = P_c(d)$ for $d \le d_{opt}-G$).

The values of the correlation $P_c(d)$ at all timing points preceding the best timing point by the length of the cyclic prefix ($G$) or less are then compared with the threshold $T_{th2}$ and first timing point with a value greater than $T_{th2}$ is declared as the start of frame (or start of the FFT window). At this stage, the timing synchronization is complete.

$$\hat{d}_{FFT} = \arg\, \underset{d}{first} \left( |P_c(d)| > T_{th2} \right) \tag{30}$$

where

$$d \in \left\{ \hat{d}_{opt} - G + 1, \hat{d}_{opt} \right\}$$

The computing means **52** performs a serial-to-parallel conversion on either the frequency-corrected samples stored in its memory **54** (for burst applications) or the frequency-synchronized current samples from the ADC module **40** (for continuous applications). The synchronization module **50** then passes these $N$ parallel steams to the FFT module **46** via the FFT input, accompanied by an FFT control signal that indicates the correct start of the FFT window, in order to enable appropriate post-FFT data recovery by the decoder **48.**

## 5. Computer simulations

Computer simulations have been run to verify the performance of the present invention according to the preferred embodiments in two test scenarios with parameters as shown in Table 1.

The frequency-selective channel consists of 24 non-zero paths, with path delays of $\tau_i$ = 0, 3, 6,..., 72 samples for scenario 1 and 19 non-zero paths with path delays of $\tau_i$= 0, 1, 2,..., 18 samples for scenario 2. The amplitude of each path varies independently according to a Rayleigh fading distribution and an exponentially decaying power delay profile with an average power of exp(-$\tau_i$ /15) per tap in scenario 1 and exp(-$\tau_i$/3.75) in scenario 2. As such, the last tap in each scenario is about 21dB weaker than the first. The phase varies uniformly in the interval $[0,2\pi]$.

The results shown reflect the performance under a time-varying channel (with mobile speed of 150km/h) and under stationary fading conditions (with mobile speed of 0km/h) in scenarios 1 and 2 respectively. A frequency offset uniformly distributed in the range $\pm(N/2-2)$ the subcarrier spacing was applied over 10,000 Matlab simulation runs. The maximum number of timing checkpoints to be used was set at $M_{max}$ = 64.

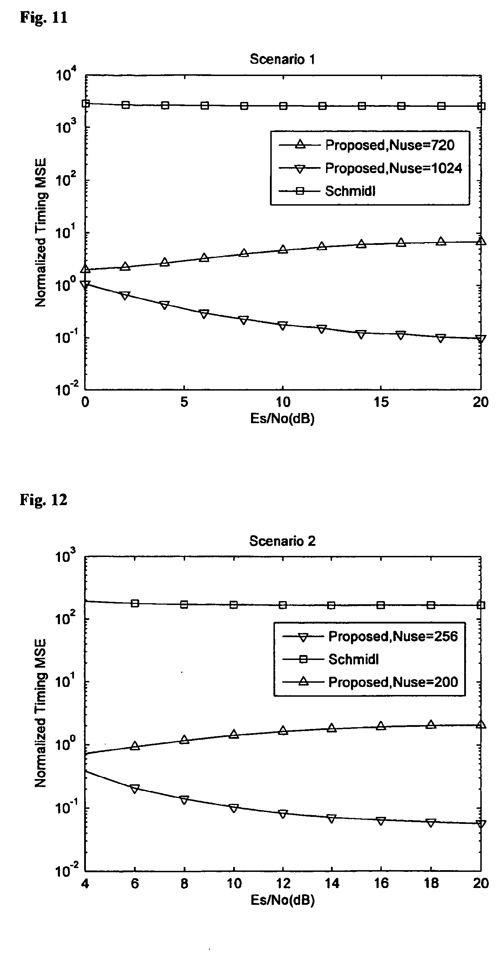

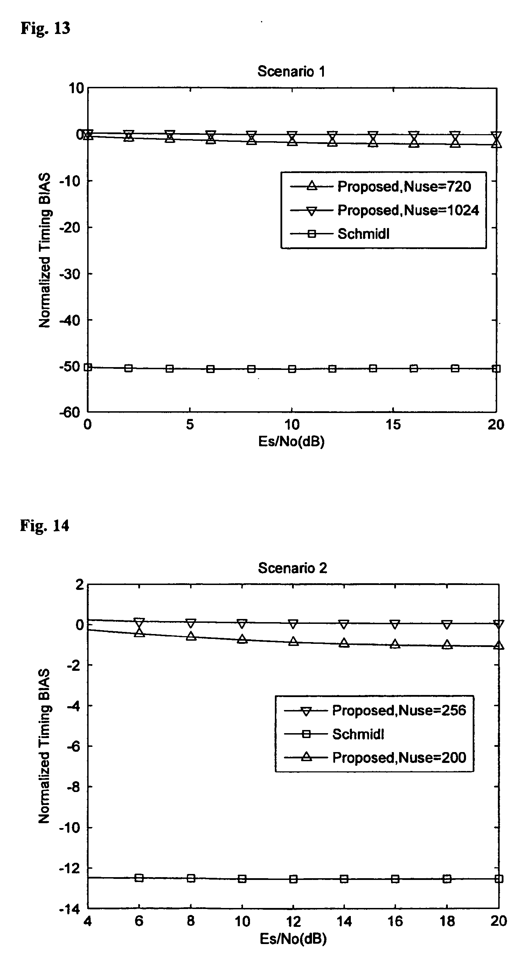

Figures 11 and 12 show that the timing mean square error (MSE) performance for the proposed method supersedes that of Schmidl and Cox and it approaches the ideal i.e. an MSE=0 samples$^2$. This is also reflected in Figures 13 and 14 where the present invention is shown to be biased towards the i deal start of frame/symbol i.e. a timing bias =0 samples. It should be noted that the slight degradation in timing MSE performance when the $N_{use}$/N ratio is less than 1 is due to an overflow experienced in the cross-correlation metric that tends to shift timing estimate to a few samples preceding the ideal start of frame. This however still falls in the ISI-free region of the cyclic prefix and does not lead to any degradation in the decoder performance.

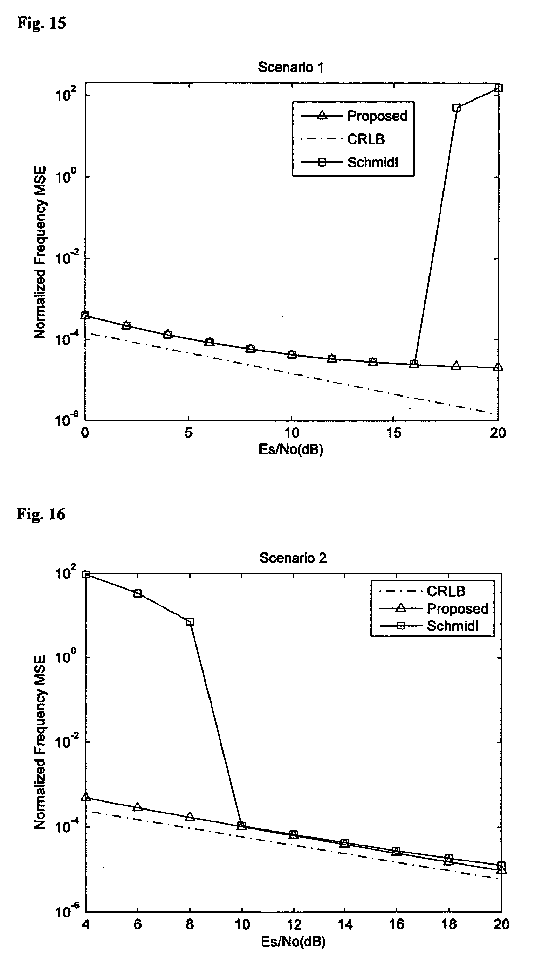

In Figures 15 and 16, it is shown that that the frequency accuracy of the proposed method is competitive with regard to Schmidl and Cox's method. The mean number of timing checkpoints used (over 10,000 runs) to achieve the results is shown in Table 2. From this, we can conclude that latency arising from the 2D time-frequency estimation is negligible.

## Claims

1. A method of synchronizing a receiver to a received signal, wherein the signal includes a training symbol having two identical parts (82, 84) and the method includes determining a degree of autocorrelation between parts of the signal at the spacing of the two identical parts, and a degree of cross-correlation between parts of the received signal and a reference copy of the training symbol, and multiplying the autocorrelation and the cross correlation together thereby to determine at least one of the timing and the frequency of the received signal.

2. A method according to claim 1 wherein the autocorrelation is used to define a timing window applied in order to select a group of peaks in the autocorrelation or cross-correlation, corresponding to likely timing offset values.

3. A method according to claim 2 wherein the timing window is defined by identifying values of timing for which the autocorrelation is a predetermined fraction of the maximum value of the autocorrelation.

4. A method according to any foregoing claim wherein the autocorrelation and cross-correlation are multiplied together to form a timing metric and a group of peaks in the timing metric are identified to identify likely timing offset values.

5. A method according to any foregoing claim further comprising identifying a maximum correlation between parts of the received signal and a reference copy of the training symbol over a two dimensional space of timing and frequency offset of the received signal.

6. A method according to claim 5, further comprising identifying a maximum correlation between parts of the received signal at a likely timing offset value and a reference copy of the training symbol over a one dimensional integer space of frequency offset.

7. A method according to claim 5 or claim 6 wherein both the frequency offset and the timing estimate are determined from the point of maximum correlation.

8. A method according to claim 6 wherein the frequency offset and/or timing estimate is determined from the point of maximum correlation and a threshold criterion.

9. A method according to any of claims 5 to 8 wherein autocorrelation between parts of the received signal is used to identify a set of likely values of the timing.

10. A method according to any of claims 5 to 8 wherein cross-correlation between parts of the received signal and a reference copy of the training symbol is used to identify a set of likely values of the timing.

11. A method according to any of claims 5 to 10 which includes estimating the fractional frequency offset of the received signal, correcting for this offset in the received signal and using the corrected representation as the received signal.

12. A method according to any of claims 5 to 10 which includes estimating the total frequency offset of the received signal, correcting for this offset in the received signal and using the corrected representation as the received signal.

13. A method according to any of claims 1 to 4 wherein the cross correlation is differential cross correlation, or coherent cross correlation.

14. A method according to any foregoing claim further comprising the adjustment of the timing estimate to an improved value by the use of a restricted timing correction window over a restricted cross-correlation and a threshold criterion, said window being less than half the symbol length.

15. A method according to claim 14 wherein the window is chosen in such a way as to avoid unwanted cross correlation peaks arising from the repetitive structure of the training symbol.

16. Apparatus for synchronizing a receiver to a received signal, wherein the signal includes a training symbol having two identical parts, the apparatus comprising control means arranged to perform the method of any foregoing claim.


**Patentansprüche**

1. Verfahren zum Synchronisieren eines Empfängers mit einem empfangenen Signal, wobei das Signal ein Trainingssymbol umfasst, das zwei identische Teile (82, 84) aufweist, und das Verfahren ein Bestimmen eines Grads an Autokorrelation zwischen Teilen des Signals am Zwischenraum der zwei identischen Teile und eines Grads an Kreuzkorrelation zwischen Teilen des empfangenen Signals und einer Referenzkopie des Trainingssymbols umfasst, sowie Multiplizieren der Autokorrelation und Kreuzkorrelation, um **dadurch** den Takt und/oder die Frequenz des empfangenen Signals zu bestimmen.

2. Verfahren gemäß Anspruch 1, wobei die Autokorrelation verwendet wird, um ein Taktfenster festzulegen, das angewandt wird, um eine Gruppe von Spitzen in der Autokorrelation oder Kreuzkorrelation entsprechend wahrscheinlicher Taktversatzwerte auszuwählen.

3. Verfahren gemäß Anspruch 2, wobei das Taktfenster festgelegt wird durch Identifizieren von Taktwerten, für die die Autokorrelation ein vorbestimmter Bruchteil des maximalen Werts der Autokorrelation ist.

4. Verfahren gemäß einem der vorhergehenden Ansprüche, wobei die Autokorrelation und Kreuzkorrelation multipliziert werden, um eine Taktmetrik zu bilden und eine Gruppe von Spitzen in der Taktmetrik identifiziert werden, um wahrscheinliche Taktversatzwerte zu identifizieren.

5. Verfahren gemäß einem der vorhergehenden Ansprüche, welches ferner ein Identifizieren einer maximalen Korrelation zwischen Teilen des empfangenen Signals und einer Referenzkopie des Trainingssymbols über einem zweidimensionalen Takt- und Frequenzversatz-Raum des empfangenen Signals umfasst.

6. Verfahren gemäß Anspruch 5, welches ferner ein Identifizieren einer maximalen Korrelation zwischen Teilen des empfangenen Signals an einem wahrscheinlichen Taktversatzwert und einer Referenzkopie des Trainingssymbol über einem eindimensionalen ganzzahligen Frequenzversatz-Raum umfasst.

7. Verfahren gemäß Anspruch 5 oder Anspruch 6, wobei sowohl der Frequenzversatz als auch die Taktschätzung aus dem Punkt maximaler Korrelation bestimmt werden.

8. Verfahren gemäß Anspruch 6, wobei der Frequenzversatz und/oder die Taktschätzung aus dem Punkt maximaler Korrelation und einem Schwellwertkriterium bestimmt wird.

9. Verfahren gemäß einem der Ansprüche 5 bis 8, wobei Autokorrelation zwischen Teilen des empfangenen Signals verwendet wird, um eine Menge wahrscheinlicher Taktwerte zu bestimmen.

10. Verfahren gemäß einem der Ansprüche 5 bis 8, wobei eine Kreuzkorrelation zwischen Teilen des empfangenen Signals und einer Referenzkopie des Trainingssymbols verwendet wird, um eine Menge wahrscheinlicher Taktwerte zu identifizieren.

11. Verfahren gemäß einem der Ansprüche 5 bis 10, welches ein Schätzen des bruchteiligen Frequenzversatzes des empfangenen Signals, Korrigieren dieses Versatzes im empfangenen Signal und Benutzen der korrigierten Darstellung als das empfangene Signal umfasst.

12. Verfahren gemäß einem der Ansprüche 5 bis 10, welches ein Schätzen des gesamten Frequenzversatzes des empfangenen Signals, Korrigieren dieses Versatzes im empfangenen Signal und Benutzen der korrigierten Darstellung als das empfangene Signal umfasst.

13. Verfahren gemäß einem der Ansprüche 1 bis 4, wobei die Kreuzkorrelation eine differentielle Kreuzkorrelation oder eine kohärente Kreuzkorrelation ist.

14. Verfahren gemäß einem der vorhergehenden Ansprüche, welches ferner die Anpassung der Taktschätzung an einen verbesserten Wert durch die Verwendung eines beschränkten Taktkorrekturfensters über einer beschränkten Kreuzkorrelation und eines Schwellwertkriteriums umfasst, wobei das Fenster weniger als die Hälfte der Symbollänge ist.

15. Verfahren gemäß Anspruch 14, wobei das Fenster so gewählt wird, dass ungewollte Kreuzkorrelationsspitzen vermieden werden, die aus der repetitiven Struktur des Trainingssymbols entstehen.

16. Vorrichtung zum Synchronisieren eines Empfängers mit einem empfangenen Signal, wobei das Signal ein Trainingssymbol umfasst, das zwei identische Teile aufweist, wobei die Vorrichtung ein Steuermittel umfasst, das ausgelegt ist, um das Verfahren eines vorhergehenden Anspruchs durchzuführen.


**Revendications**

1. Procédé de synchronisation d'un récepteur sur un signal reçu, dans lequel le signal inclut un symbole d'apprentissage ayant deux parties (82, 84) identiques et le procédé inclut la détermination d'un degré d'autocorrélation entre des parties du signal à la séparation des deux parties identiques, et d'un degré de corrélation croisée entre des parties du signal reçu et une copie de référence du symbole d'apprentissage, et la multiplication de l'autocorrélation et de la corrélation croisée ensemble pour ainsi déterminer au moins l'un du temporisation et de la fréquence du signal reçu.

2. Procédé selon la revendication 1 dans lequel l'autocorrélation est utilisée pour définir une fenêtre temporelle appliquée afin de sélectionner un groupe de pics dans l'autocorrélation ou la corrélation croisée, correspondant à des valeurs de décalage temporel probables.

3. Procédé selon la revendication 2 dans lequel la fenêtre temporelle est définie en identifiant des valeurs de temporisation pour lesquelles l'autocorrélation est une fraction prédéterminée de la valeur maximum de l'autocorrélation.

**4.** Procédé selon l'une quelconque des revendications précédentes dans lequel l'autocorrélation et la corrélation croisée sont multipliées ensemble pour former une mesure temporelle et un groupe de pics dans la mesure temporelle sont identifiés pour identifier des valeurs de décalage temporel probables.

**5.** Procédé selon l'une quelconque des revendications précédentes comprenant en outre l'identification d'une corrélation maximum entre des parties du signal reçu et une copie de référence du symbole d'apprentissage sur un espace bidimensionnel de décalage temporel et fréquentiel du signal reçu.

**6.** Procédé selon la revendication 5, comprenant en outre l'identification d'une corrélation maximum entre des parties du signal reçu à une valeur de décalage temporel probable et une copie de référence du symbole d'apprentissage sur un espace entier unidimensionnel de décalage fréquentiel.

**7.** Procédé selon la revendication 5 ou la revendication 6 dans lequel le décalage fréquentiel et l'estimation temporelle sont tous les deux déterminés à partir du point de corrélation maximum.

**8.** Procédé selon la revendication 6 dans lequel le décalage fréquentiel et/ou l'estimation temporelle est/sont déterminé (s) à partir du point de corrélation maximum et d'un critère de seuil.

**9.** Procédé selon l'une quelconque des revendications 5 à 8 dans lequel l'autocorrélation entre des parties du signal reçu est utilisée pour identifier un ensemble de valeurs probables de temporisation.

**10.** Procédé selon l'une quelconque des revendications 5 à 8 dans lequel la corrélation croisée entre des parties du signal reçu et une copie de référence du symbole d'apprentissage est utilisée pour identifier un ensemble de valeurs probables de temporisation.

**11.** Procédé selon l'une quelconque des revendications 5 à 10 qui inclut une estimation du décalage fréquentiel fractionnaire du signal reçu, la correction de ce décalage dans le signal reçu et l'utilisation de la représentation corrigée comme le signal reçu.

**12.** Procédé selon l'une quelconque des revendications 5 à 10 qui inclut une estimation du décalage fréquentiel total du signal reçu, la correction de ce décalage dans le signal reçu et l'utilisation de la représentation corrigée comme le signal reçu.

**13.** Procédé selon l'une quelconque des revendications 1 à 4 dans lequel la corrélation croisée est une corrélation croisée différentielle, ou une corrélation croisée cohérente.

**14.** Procédé selon l'une quelconque des revendications précédentes comprenant en outre l'ajustement de l'estimation temporelle à une valeur améliorée en utilisant une fenêtre de correction temporelle restreinte sur une corrélation croisée restreinte et un critère de seuil, ladite fenêtre étant inférieure à la moitié de la longueur de symbole.

**15.** Procédé selon la revendication 14 dans lequel la fenêtre est choisie de manière à éviter des pics indésirables de corrélation croisée découlant de la structure répétitive du symbole d'apprentissage.

**16.** Appareil de synchronisation d'un récepteur sur un signal reçu, dans lequel le signal inclut un symbole d'apprentissage ayant deux parties identiques, l'appareil comprenant un moyen de commande agencé pour mettre en ouvre le procédé selon l'une quelconque des revendications précédentes.

Fig. 1 (Prior Art)

Fig. 2 (Prior Art)

**Fig. 3 (Prior Art)**

```
  62       64        66      70
  ┌──┬──────────┬──┬──────────────┬──┬──────────────┐        ┌──┬──────────────┐
  │  │ Preamble │  │Useful symbol 1│ │Useful symbol 2│ ······ │  │Useful symbol L│
  └──┴──────────┴──┴──────────────┴──┴──────────────┘        └──┴──────────────┘
                                                                         72
```

```
        ┌──────┬─────────────────────┬──────┐
        │ CP1  │                     │ CP1  │
        └──────┴─────────────────────┴──────┘
    68 ╱          ▲
                  └──────────── copy ──────────┘
```

**Fig. 4**

**Fig. 5**

**Fig. 6**

**Fig. 7**

Fig. 8

Fig. 9

**Fig. 10**

**Fig. 11**

Scenario 1

**Fig. 12**

Scenario 2

**Fig. 13**

Scenario 1

**Fig. 14**

Scenario 2

Fig. 15

Scenario 1

Fig. 16

Scenario 2

**Table 1**

| Test case | Scenario 1 | Scenario 2 |
|---|---|---|
| Wireless standard | Mobile WiMax | Fixed WiMax |
| IFFT/FFT size, N | 1024 | 256 |
| No. of used subcarriers, $N_{use}$ | 720 | 200 |
| Cyclic prefix length, G | 128 | 32 |
| Modulation | QPSK | QPSK |
| 3dB boost | -nil- | -nil- |
| Bandwidth, N/T | 10MHz | 5MHz |
| Carrier frequency, $F_c$ | 2GHz | 2GHz |
| Mobile speed | 150kmph | 0kmph |
| No. of channel taps | 24 | 19 |
| Channel tap spacing | 3 samples | 1 sample |
| Average tap power | $\exp(-\tau_i/15)$ | $\exp(-\tau_i/3.75)$ |
| Fading distribution | Rayleigh | Rayleigh |
| Frequency offset | $\pm 510*rand$ | $\pm 126*rand$ |
| Auto filter constant, $K_2$ | 0.7 | 0.7 |
| Frequency probability, $P_{FFA}$ | $10^{-10}$ | $10^{-8}$ |
| Maximum checkpoints, $M_{max}$ | 64 | 64 |
| Timing probability, $P_{TFA}$ | $10^{-6}$ | $10^{-6}$ |

**Table 2**

| SNR (dB) | 2 | 6 | 10 | 16 | 20 |
|---|---|---|---|---|---|
| Scenario 1 | 1.0769 | 1.0056 | 1.0017 | 1.0011 | 1.0010 |
| Scenario 2 | -nil- | 1.8190 | 1.3656 | 1.2480 | 1.2428 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 6771976 B

### Non-patent literature cited in the description

• **Morelli, M. ; Mengali, U.** An improved frequency offset estimator for OFDM systems. *IEEE Comm. Lett.,* March 1999, vol. 3 (3), 239-241
• **Minn, H. ; Zeng, M. ; Bhargava, V.K.** On timing offset estimation for OFDM systems. *IEEE Comm. Lett.,* July 2000, vol. 4, 242-244
• **Park, B. ; Cheon, H. ; Kang, C. ; Hong, D.** A novel timing estimation method for OFDM systems. *IEEE Comm. Lett.,* May 2003, vol. 7 (5), 239-241
• **Ren, G. ; Chang, Y. ; Zhang, H. ; Zhang, H.** Synchronization methods based on a new constant envelope preamble for OFDM systems. *IEEE Trans. on Broadcasting,* March 2005, vol. 51 (1